(19) Europäisches Patentamt
European Patent Office
Office européen des brevets

(11) **EP 2 013 125 B1**

(12) **FASCICULE DE BREVET EUROPEEN**

(45) Date de publication et mention
de la délivrance du brevet:
**27.04.2011 Bulletin 2011/17**

(21) Numéro de dépôt: **07731785.7**

(22) Date de dépôt: **20.03.2007**

(51) Int Cl.:
**B65H 16/00** (2006.01)     **B65H 18/00** (2006.01)
**B65H 23/18** (2006.01)     **G01N 21/89** (2006.01)
**G01N 21/86** (2006.01)

(86) Numéro de dépôt international:
**PCT/FR2007/050971**

(87) Numéro de publication internationale:
**WO 2007/107675 (27.09.2007 Gazette 2007/39)**

(54) **PROCEDE ET INSTALLATION D'INSPECTION D'UNE BANDE ENROULEE**

VERFAHREN UND ANLAGE ZUR INSPEKTION EINES GEWICKELTEN BANDS

METHOD AND INSTALLATION FOR INSPECTING A WOUND STRIP

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **21.03.2006 FR 0650978**

(43) Date de publication de la demande:
**14.01.2009 Bulletin 2009/03**

(73) Titulaire: **Siemens VAI Metals Technologies SAS
42400 Saint-Chamond (FR)**

(72) Inventeur: **MAUUARY, Stanislas
F-42160 Bonson (FR)**

(74) Mandataire: **Fischer, Michael
Siemens AG
Postfach 22 16 34
80506 München (DE)**

(56) Documents cités:
**JP-A- 8 122 274        US-A- 2 502 469
US-A- 2 771 251        US-A- 2 930 228
US-A- 4 234 135        US-A- 5 431 192
US-A1- 2005 183 521**

**Description**

L'invention a pour objet un procédé et une installation d'inspection des deux faces d'une bande enroulée en bobine, en particulier pour vérifier la qualité d'une bande de tôle après laminage.

On sait que, à l'issue du laminage, la bande de tôle laminée peut présenter certains défauts d'aspect qui peuvent être dus, par exemple, à une légère variation d'épaisseur dans le sens transversal, provenant de la déformation et de l'usure des cylindres et/ou du cédage de la cage, ou bien à des marques laissées par les cylindres de travail, certains défauts pouvant aussi être dus aux cylindres de soutien ou à la cage elle-même.

Ces défauts d'aspect se reproduisent sur chaque face, dans la direction longitudinale de laminage, avec une période correspondant au développement, dans cette direction, de la circonférence des cylindres.

Or, il est de plus en plus nécessaire de livrer des tôles ayant une qualité de surface et, d'une façon générale, un aspect aussi parfaits que possible. Pour cela, il faut donc vérifier l'état de surface de la bande de tôle à l'issue du laminage, en particulier, pour observer les marques laissées périodiquement sur la bande par le passage entre les cylindres de travail.

Compte tenu de la nature des défauts à détecter, cette inspection peut difficilement être réalisée par des moyens automatiques tels que les caméras numériques que l'on utilise, par exemple, dans le laminage à chaud et il est préférable que le contrôle soit effectué visuellement par un opérateur. Pour les défauts difficiles à détecter, on a d'ailleurs développé le procédé dit de « pierrage » qui consiste à faire passer une pierre spéciale sur la bande en prenant appui sur une table d'inspection.

Etant donné que les marques de laminage se produisent périodiquement, il est suffisant de réaliser le contrôle sur certaines bobines prélevées sur le circuit de production et seulement sur une longueur de bande correspondante à la plus grande des périodes de marquage des différents cylindres, qui peut être, par exemple, de 10 à 15 m.

Pour cela, on prélève, habituellement, sur la bande, une section formant un échantillon de longueur suffisante pour l'examen et qui est transporté jusqu'à une table d'inspection.

Par ailleurs, il est nécessaire d'observer les deux faces de la bande et, après l'inspection de la face supérieure, il faut donc retourner la bande pour vérifier l'autre face.

Dans une installation décrite, par exemple, dans le document JP-2000 254 725, un échantillon est découpé par une cisaille volante et envoyé sur un dispositif d'inspection placé en aval de la bobineuse et comportant plusieurs paires de rouleaux entre lesquels est pincée la bande et qui, en pivotant, autour d'un axe horizontal parallèle au bord latéral de l'échantillon, permettent le retournement de celui-ci.

Un autre dispositif d'inspection avec retournement, décrit dans le document JP 59 113 916, comporte une bande transporteuse formant une table d'inspection mobile qui, après inspection d'une première face, dirige la bande vers un dispositif de retournement, éventuellement en deux parties, comportant deux bandes transporteuses entre lesquelles est pincée la bande et qui sont portées par des plateaux permettant un retournement de 180°, l'échantillon ainsi retourné étant envoyé vers une seconde table d'inspection placée en aval.

Etant donné que, comme on l'a vu, l'échantillon prélevé sur la bande doit avoir une assez grande longueur, de l'ordre de 10 à 15m, de tels dispositifs de retournement sont assez complexes et onéreux.

De plus, l'inspection se réalise dans des conditions assez inconfortables pour l'opérateur du fait qu'elle est réalisée sur une bande posée à plat.

US 2 502 469 présente une installation d'inspection des deux faces d'une bande métallique enroulée en une bobine, caractérisé par le fait que l'on fait défiler au moins une partie de la bande le long d'un plan d'inspection sensiblement vertical entre un dispositif de déroulement disposé à un premier niveau et un dispositif d'enroulement disposé à un second niveau. L'inspection est réalisée visuellement par deux miroirs étant placés de part et d'autre des faces de la bande entre le premier et le second niveau et étant inclinés de façon à ce qu'un opérateur puisse regarder simultanément chacune des faces au travers des miroirs. Une opération de pierrage semble donc ici non envisageable, car les miroirs font obstacle au pierrage en face de chaque côté de bande.

L'invention a pour objet un nouveau procédé et une installation d'inspection permettant de résoudre l'ensemble de ces problèmes sans présenter les inconvénients des installations connues.

Conformément à l'invention, pour inspecter les deux faces d'une bande métallique enroulée en bobine, on fait défiler au moins une partie de la bande le long d'un plan d'inspection sensiblement vertical entre un dispositif de déroulement disposé à un premier niveau et un dispositif d'enroulement disposé à un second niveau et l'inspection est réalisée visuellement par un opérateur se déplaçant sur un plancher disposé à un niveau intermédiaire entre le premier et le second niveau et pouvant passer d'un côté ou de l'autre du plan de défilement de la bande pour l'inspection des deux faces de celle-ci.

Dans un premier mode de réalisation, la bobine est prélevée sur le circuit de production d'une installation de laminage de bandes métalliques et est posée sur un dispositif de déroulement placé à un niveau inférieur, à partir duquel la bobine est déroulée en tirant une extrémité de la bande qui est fixée sur un dispositif d'enroulement placé à un niveau supérieur, de façon à faire défiler une partie à inspecter devant l'opérateur ; on inverse ensuite le sens de défilement pour le réenroulement de la partie inspectée sur la bobine.

Dans un autre mode de réalisation, la bande inspectée est un échantillon d'une bande laminée, enroulé en un bobineau qui est disposé sur un dispositif de déroulement placé à un premier niveau et l'on déroule ce bobineau pour faire défiler l'échantillon devant l'opérateur puis l'enrouler sur un dispositif d'enroulement placé à un second niveau.

Dans le cas où la bande est réalisée par laminage réversible entre deux enrouleuses-dérouleuses placées de part et d'autre d'au moins une cage de laminage réversible, l'échantillon à inspecter peut avantageusement être constitué de la longueur de service enroulée sur l'une des enrouleuse-dérouleuse, cette longueur ayant subi au moins une passe de laminage et comportant donc les marques laissées par les cylindres de travail et qui se reproduisent à chaque passe.

L'invention couvre également une installation d'inspection, sur ses deux faces, d'une bande en métallique enroulée en bobine, comprenant des moyens de commande du défilement de la bande le long d'un plan sensiblement vertical, entre un dispositif de déroulement placé à un premier niveau et sur lequel est placée la bobine et un dispositif d'enroulement placé à un second niveau et sur lequel s'enroule au moins une partie de la bande en défilant devant une station d'inspection placée sur un plancher disposé à un niveau intermédiaire entre le premier et le second niveau et sur lequel peut se déplacer un opérateur en passant d'un côté ou de l'autre du plan de défilement de la bande pour l'inspection visuelle des deux faces de celle-ci.

De façon particulièrement avantageuse, l'installation comporte des moyens amovibles de prise en charge, déplaçables verticalement entre le premier niveau pour la prise en charge d'une extrémité de la bande et le second niveau pour l'engagement de ladite extrémité sur le dispositif d'enroulement puis sa libération des moyens de prise en charge.

Dans un mode de réalisation préférentiel, les moyens de prise en charge sont montés sur un chariot déplaçable, le long d'un plan de défilement de la bande, entre deux positions écartées verticalement, respectivement, une première position, au premier niveau, à proximité du dispositif du déroulement, et une seconde position, au second niveau, à proximité du dispositif d'enroulement, lesdits moyens de prise en charge comportant deux parties placées de part et d'autre dudit plan de défilement de la bande, et se déplaçant l'une vers l'autre pour le serrage d'une extrémité de la bande dans le plan de défilement.

Avantageusement, les moyens de prise en charge comportent une partie d'appui, de préférence une règle de décollement de la bande, montée fixe sur le chariot, d'un côté du plan de défilement de la bande et une partie mobile placée de l'autre côté du plan de défilement et déplaçable transversalement audit plan pour le pinçage de l'extrémité de la bande contre la partie d'appui.

L'invention permet ainsi l'inspection visuelle des deux faces de la bande en faisant défiler celle-ci devant un opérateur qui peut se déplacer sur un plancher placé à un niveau intermédiaire d'inspection, de part et d'autre du plan de défilement de la bande qui passe par une ouverture ménagée dans ledit plancher.

Selon une autre caractéristique de l'invention, l'installation est équipée d'au moins une table placée au niveau d'inspection et s'étendant sensiblement dans le plan de défilement de la bande sur au moins un côté de celle-ci, ladite table étant montée sur un cadre déplaçable parallèlement audit plan, entre une position écartée et une position d'application sur la table d'une face correspondante de la bande pour l'inspection de l'autre face par un procédé de pierrage.

Cependant, dans le cas où la bande se déroule à partir d'une bobine de grand diamètre, il est possible de freiner le déroulement de celle-ci, de façon à mettre la bande sous une tension suffisante pour réaliser le contrôle par pierrage sans appui sur une table.

D'autres caractéristiques avantageuses apparaîtront dans la description suivante d'un mode de réalisation particulier, donné à titre d'exemple non limitatif et est illustré par les dessins annexés.

La figure 1 est une vue schématique, en perspective, de l'ensemble d'une installation en position d'inspection.

La figure 2 montre l'ensemble de l'installation au début du déroulement d'une bobine.

La figure 3 est une vue de détail montrant les moyens de prise en charge en position basse.

La figure 4 est une vue de détail montrant les moyens de prise en charge en position haute et le dispositif d'enroulement.

La figure 5 est une vue d'ensemble montrant la fixation de la tête de bande sur le dispositif d'enroulement.

La figure 6 montre, en trois schémas successifs, l'utilisation d'un viseur laser pour le repérage des marques de laminage.

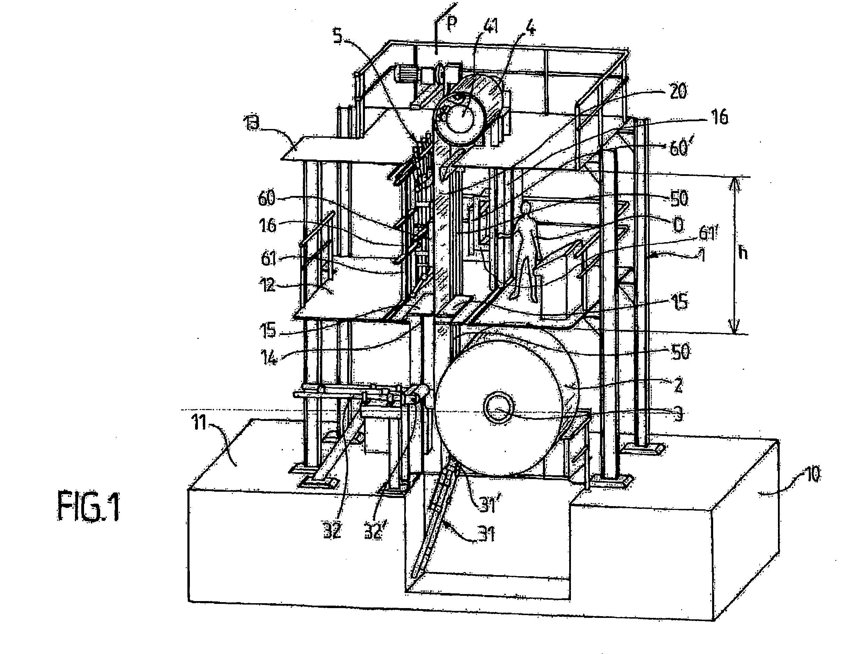

La figure 1 est une vue d'ensemble schématique d'une installation d'inspection selon l'invention, placée à l'intérieur d'un bâti fixe 1 reposant sur un massif de fondation 10 et comportant, selon une caractéristique essentielle de l'invention, trois niveaux superposés, écartés verticalement, respectivement un premier niveau inférieur 11, un second niveau supérieur 13 et un niveau intermédiaire 12 où est placé un plancher pour l'opérateur.

Comme habituellement, pour vérifier la qualité de surface des bandes laminées, on prélève sur le circuit de production, une bobine 2 qui est posée sur un dispositif de déroulement 3 fixé sur le massif de fondation, c'est-à-dire au niveau inférieur 11 de l'installation.

La bande 20 se déroule alors à partir de la bobine 2, suivant un plan de défilement vertical P, et vient s'enrouler sur un dispositif d'enroulement comportant un mandrin 4 placé au niveau supérieur 13 du bâti 1 de l'installation et entraîné en rotation autour d'un axe horizontal.

Le dispositif de déroulement est représenté simplement, sur les dessins, par un arbre 3 parallèle au plan de défilement P et sur lequel est enfilée la bobine 2.

Cet arbre 3 est porté, à ses extrémités, par un berceau non représenté sur les dessins et formant, de préférence, un châssis en U monté coulissant horizontalement sur le massif de fondation 10, de façon à maintenir, lors du déroulement de la bobine, la dernière spire 22 de celle-ci, tangente au plan vertical de défilement P.

Des moyens d'application 31, 32 comprenant chacun un rouleau 31', 32' monté à l'extrémité d'un bras télescopique actionné par des vérins, permettent de maintenir la dernière spire 22 appliquée sur la bobine pendant le déroulement. Le rouleau 31' peut-être entraîné en rotation, par des moyens non représentés, pour commander la rotation de la bobine 2 sur l'arbre 3.

Après décollement de la tête d'extrémité 21 de la bande, de la façon décrite plus loin, le rouleau d'application 32' prend appui sur la bobine 2 le long d'une génératrice horizontale pour permettre le déroulement de la bande suivant le plan vertical tangent à cette génératrice.

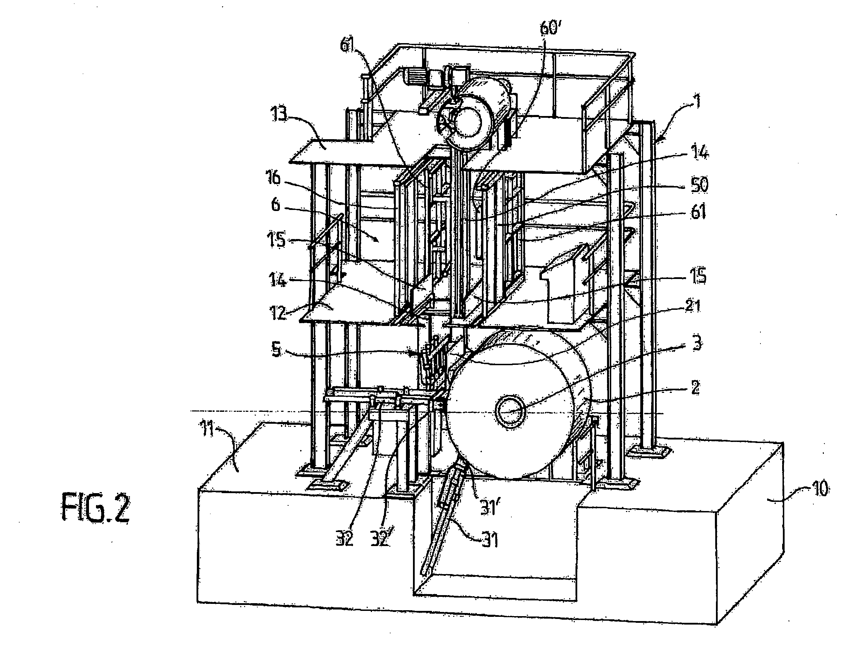

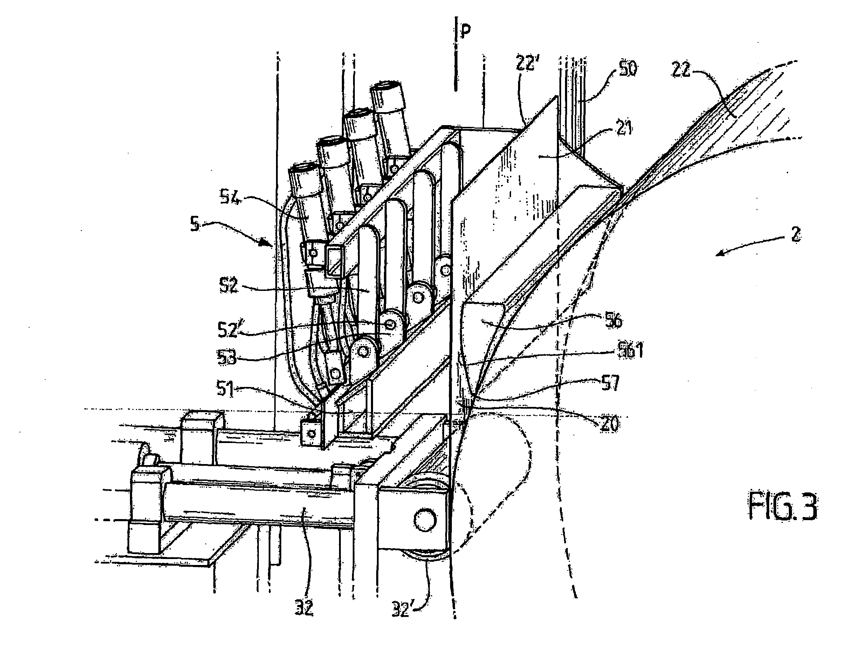

Dès que la tête 21 de la bande placée à l'extrémité de la dernière spire 22, se décolle de la bobine (figure 2), elle s'engage dans un organe de prise en charge 5 représenté en détail sur la figure 3 et monté sur un chariot 51 déplaçable verticalement et placé, à ce moment, en position basse.

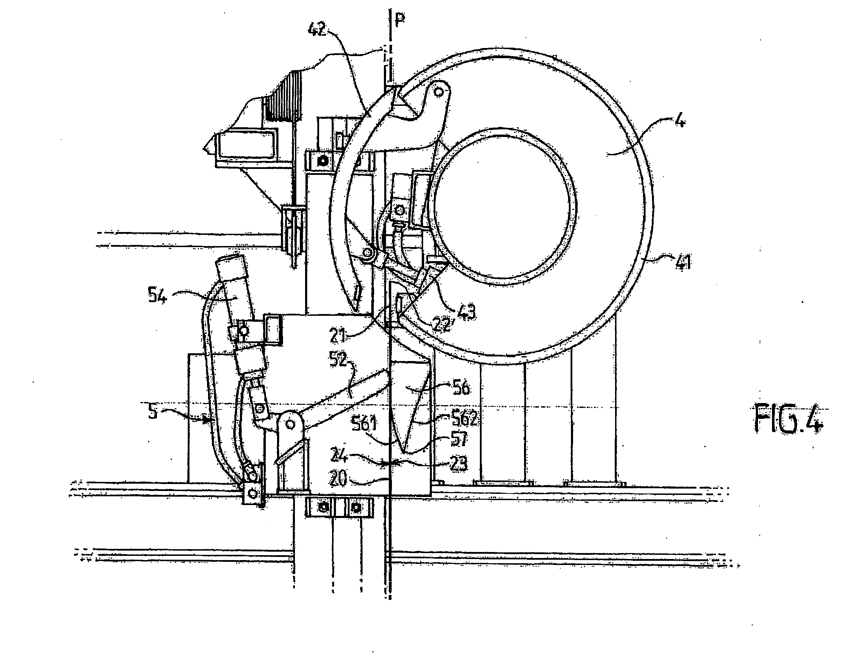

Comme le montre la figure 3, le chariot 51 porte une pluralité de leviers 52 articulés chacun autour d'un axe 52' sur une chape 53 montée sur le chariot 51 et actionnés respectivement, chacun par un vérin 54. Les vérins 54 sont commandés en synchronisme afin de faire pivoter simultanément les leviers 52 entre une position verticale, représentée sur la figure 3, qui permet le passage de la tête 21 de la bande 20 et une position abaissée, représentée sur la figure 4, pour laquelle chaque levier 52 vient prendre appui, par une extrémité arrondie, sur la bande 20 en serrant la tête 21 de celle-ci contre une règle 56 placée du côté opposé et fixée, par ses extrémités, sur le chariot 51. Cette règle 56 présente une section transversale triangulaire avec un sommet 57 et deux faces incurvées, respectivement une face externe 561 et une face interne 562 tournée vers la bobine 20.

D'autre part, le chariot 5 est monté coulissant le long de rails verticaux 50 ménagés sur le bâti 1, de part et d'autre de la bande et il est actionné par un système non représenté de façon à se déplacer verticalement entre la position basse, représentée sur la figure 3, de prise en charge de la tête 21 de la bande et une position haute, représentée sur la figure 4, au niveau du plancher supérieur 13 sur lequel est placé le dispositif d'enroulement 4.

Comme indiqué plus haut, l'arbre 3 sur lequel est enfilée la bobine 2 est porté par un berceau non représenté qui est monté coulissant sur le massif de fondation 2 de façon que, pendant le déroulement de la bobine 20, la face externe 22 de celle-ci soit maintenue tangente au plan vertical P le long duquel se déplace la face externe 561 de la règle 56. Celle-ci forme donc une sorte de couteau ayant une arête 57 qui, dans la position basse du chariot 5 représentée sur la figure 3, vient s'appliquer sur la face externe de la bobine 20 qui peut être entraînée en rotation par le rouleau d'application 31', ce dernier pouvant être motorisé. De la sorte, l'extrémité 22' de la dernière spire 22 se décolle le long de l'arête 57 et la tête 21 de la bande remonte entre la face externe 561 de la règle 56 et les leviers 52 qui sont alors relevés par les vérins 54, de la façon indiquée sur la figure 3.

Lorsque le bord supérieur 22' de la bande se trouve à une hauteur suffisante au-dessus de la règle 56, les leviers 52 sont abaissés de façon à serrer, contre la face externe 561, la tête 21 de la bande qui est ainsi prise en charge par le chariot 5. On commande alors le déplacement vertical du chariot 5 qui détermine le déroulement de la bande en amenant la tête 21 de celle-ci au niveau du dispositif d'enroulement 4, dans la position représentée sur la figure 4.

Ce dispositif d'enroulement comporte un mandrin cylindrique 41 monté rotatif autour d'un axe horizontal et constitué d'une paroi cylindrique ayant une partie articulée 42 qui peut pivoter sous l'action de vérins 43, de façon à ménager une ouverture dans laquelle s'engage l'extrémité 21 de la bande 20 dans la position haute du chariot 5. La partie articulée 42 est alors refermée par les vérins 43 sur cette extrémité 21 de la bande et le mandrin 4 est entraîné en rotation afin de commander l'enroulement de la bande 20 qui se déroule à partir de la bobine 2. De préférence, le déroulement de la bobine est freiné de façon à maintenir une certaine tension de la bande 20 dans le plan vertical de défilement P.

La bande traverse ainsi le plancher intermédiaire 12 qui passe au-dessus de la bobine 2 et est muni d'une ouverture 14 assez large pour permettre le passage du chariot 5 avec la bande. Cette ouverture peut être refermée, après le passage du chariot, par des volets 15 laissant simplement une ouverture rectangulaire de largeur suffisante pour éviter tout contact de la bande avec une partie fixe.

L'installation se trouve alors dans la position représentée schématiquement sur la figure 1, pour laquelle une certaine longueur de bande correspondant à la différence de niveau (h) entre les planchers 12 et 13 s'étend verticalement devant une station d'inspection 6 ménagée sur le plancher intermédiaire 12. Grâce à l'invention, cette inspection peut être effectuée visuellement par un opérateur O, la différence de niveaux h entre les planchers 12 et 13 étant suffisante pour permettre le déplacement de l'opérateur sur le plancher 12 en contournant le plan de défilement de la bande de façon à observer directement l'une ou l'autre des deux faces 23, 24 de celles-ci.

D'autre part, la station d'inspection 6 peut être équipée de divers moyens accessoires qui vont être décrits maintenant.

Pour assurer la sécurité pendant les manoeuvres, deux panneaux verticaux 16, parallèles au plan de défilement P, sont montés coulissants horizontalement entre les deux planchers 12 et 13 et sont écartés seulement après rabattement des volets 15 pour permettre l'observation des deux faces 23, 24 de la bande par l'opérateur O.

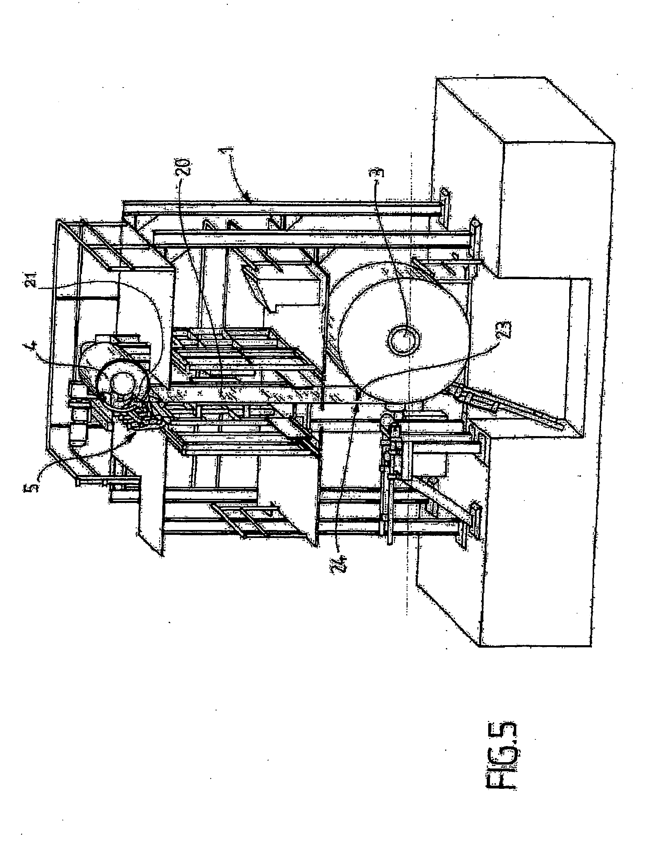

Par ailleurs, de chaque côté de la bande est placée une table verticale 60, 60' portée par un cadre 61, 61' qui est également monté coulissant horizontalement entre les deux planchers 12 et 13, parallèlement au plan de défilement P, de façon à se déplacer entre une position écartée, représentée sur les figures 2 et 5, qui permet notamment le passage du chariot 5 avec la bande 20 et une position d'inspection représentée sur la figure 1, pour laquelle le cadre 61 placé du côté opposé à la face inspectée 23, a été décalé de façon que la table correspondante 60 se trouve à une faible distance de la bande. Les volets 15 étant rabattus, l'opérateur O peut alors s'approcher de la bande 20 et procéder à une inspection par pierrage de la face 23 en prenant appui sur la table 60, par la face opposée 24 de la bande 20.

Pour éviter tout risque de contact entre la table d'appui et la bande 20, la table 60 peut être reliée au cadre de support 61, par exemple par un système à parallélogramme déformable lui permettant de se déplacer parallèlement à elle-même entre une position écartée et une position d'inspection pour laquelle la table 60 se trouve pratiquement au contact de la bande 20. Cette table 60 peut, d'ailleurs, être équipée d'électro-aimants pour assurer l'application de la partie inspectée de la bande sur la table 60, au moment de l'inspection.

L'opérateur O peut ainsi inspecter visuellement une première face 23 de la bande 20 et, éventuellement, effectuer un pierrage grâce à la table 60. Celle-ci est ensuite écartée de nouveau et l'opérateur, circulant sur le plancher 12, passe de l'autre côté de la bande afin d'inspecter l'autre face 24 de celle-ci. Une seconde table d'appui 60' peut alors être avancée pour venir se placer au contact de la bande 20 afin d'effectuer une opération de pierrage de la seconde face 24.

Il est ainsi possible d'inspecter visuellement les deux faces de la bande sur une hauteur un peu inférieure à l'écartement h entre le plancher intermédiaire 12 et le plancher supérieur 13. Comme cette hauteur est, normalement, inférieure à la longueur d'inspection souhaitée, qui dépend de la période de marquage des cylindres du laminoir, le mandrin 4 est entraîné en rotation de façon à enrouler la longueur inspectée pour faire venir au niveau de la station d'inspection, une nouvelle longueur de bande. Il est ainsi possible, par étapes, d'inspecter la longueur nécessaire pour repérer les défauts périodiques dus au marquage des cylindres.

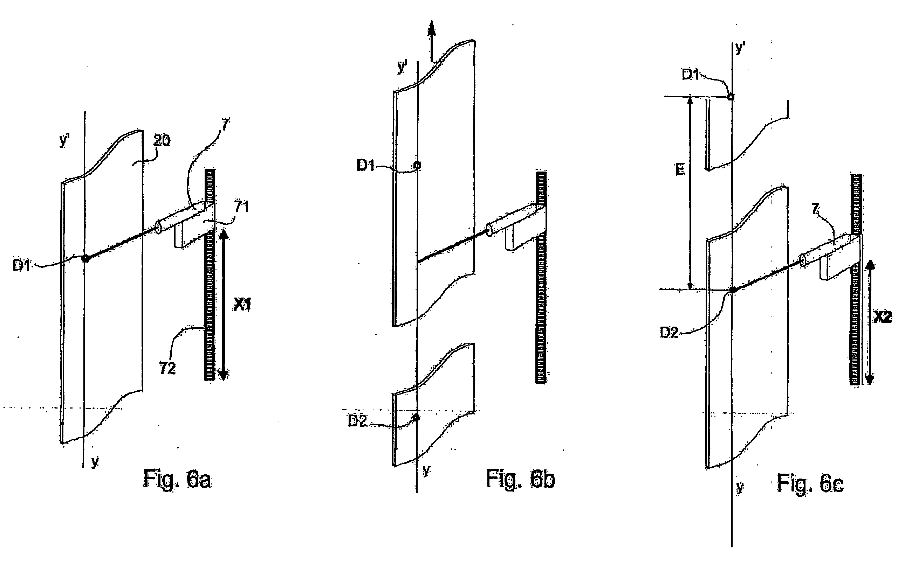

Le procédé d'inspection verticale selon l'invention permet d'ailleurs de mesurer avec exactitude la période des défauts repérés, par exemple de la façon représentée schématiquement sur la figure 6.

La station d'inspection 6 peut, en effet, être équipée d'un viseur laser 7 porté par un support 71 monté coulissant le long d'une règle graduée 72 permettant de mesurer avec précision la position du viseur 7. Lorsque l'opérateur O a repéré un défaut D1 sur la bande 20 arrêtée en position d'inspection, il en repère avec précision la position au moyen du viseur 7 (figure 6a). Il commande ensuite la rotation du mandrin 4 pour enrouler sur celui-ci la partie inspectée (figure 6b) et voit apparaître un second défaut D2 qui, s'il est placé sur la même ligne verticale y'y que le premier défaut D1, correspond très certainement à un marquage périodique. L'enroulement de la bande est de nouveau stoppé lorsque le nouveau défaut D2 se trouve au niveau de l'opérateur. Celui-ci déplace alors le viseur 7 pour repérer avec précision la position du second défaut D2 (figure 6c). Connaissant l'angle de rotation du mandrin 4 entre les deux positions des figures 6a et 6c et le diamètre de la spire enroulée, on peut déterminer la longueur enroulée L. Le pas E entre les deux défauts périodiques D1 et D2 est alors :

$$E = L+(X1 - X2)$$

X1 et X2 étant les mesures des deux positions du viseur 7 le long de l'échelle 72, respectivement dans la position 6a de visée du premier défaut D1 et dans la position 6c de visée du second défaut D2.

Ce pas E peut être déterminé par un calculateur qui, ayant en mémoire les caractéristiques du laminoir dans lequel a été traitée la bobine inspectée, en particulier le diamètre des cylindres et le taux de réduction d'épaisseur dans chaque cage, peut donner une indication sur l'origine des défauts détectés, en particulier les cylindres ayant provoqué un marquage périodique afin, par exemple, de repérer les cylindres à remplacer ou à rectifier.

Bien entendu, l'invention ne se limite pas aux détails du mode de réalisation qui vient d'être décrit à titre de simple exemple mais couvre au contraire toutes les variantes entrant dans le même cadre de protection et utilisant, notamment, des moyens équivalents.

En particulier, l'invention est prévue spécialement pour le repérage visuel des marques résultant du laminage afin d'apporter les corrections nécessaires, mais permettrait aussi de repérer d'autres défauts et, d'une façon générale, de vérifier la qualité de surface d'une tôle enroulée en bobine.

Par ailleurs, on pourrait utiliser d'autres moyens de commande du déroulement et de l'enroulement de la bande. De même, la station d'inspection pourrait être disposée différemment, et d'autres moyens d'inspection pourraient être utilisés.

Par exemple, comme indiqué plus haut, il est possible de mettre la bande sous tension entre le mandrin d'enroulement 4 et la bobine 2 dont le déroulement est freiné. Cette tension pourrait être suffisante pour réaliser l'inspection par le procédé de pierrage, sans appui de la bande sur les tables verticales 60, 60' qui peuvent alors être supprimées.

D'autre part, dans le mode de réalisation qui vient d'être décrit, l'inspection est réalisée sur certaines bobines prélevées sur le circuit de production et transportées dans une installation séparée où la bobine est déroulée sur une table horizontale. On ne peut, alors inspecter que la face supérieure de la bande et, pour contrôler les deux faces, on préfère, habituellement, prélever sur la bande un échantillon ayant la longueur nécessaire, c'est-à-dire 10 à 15 m environ. Ainsi, cet échantillon peut être retourné pour inspecter successivement les deux faces.

Dans la disposition connue décrite, par exemple, dans le document JP-2000 254725, cet échantillon est découpé par une cisaille volante et envoyé par un aiguillage vers la table d'inspection qui est disposée immédiatement en aval de la bobineuse. Cependant, l'ensemble est très encombrant et l'on ne dispose pas toujours de la place nécessaire, en particulier pour la modernisation d'une installation existante.

La disposition du document JP 59 113916 est encore plus encombrante puisqu'il est prévu de placer un dispositif de retournement entre deux tables d'inspection.

L'installation selon l'invention, en revanche, est beaucoup moins encombrante, tout en permettant une inspection visuelle des deux faces, du fait que cette inspection est réalisée suivant un plan vertical.

Dans le cas, par exemple, d'une installation de laminage continu comportant deux enrouleuses placées l'une après l'autre ou montées sur un carrousel, l'installation d'inspection peut être placée à proximité immédiate de la sortie du laminoir, à côté des enrouleuses ou immédiatement en aval de celles-ci. La bobine en fin d'enroulement ne doit alors être déplacée que de quelques mètres pour venir en position de déroulement, à la partie inférieure de l'installation d'inspection. Il n'est donc pas nécessaire de transporter la bobine dans une installation séparée.

Mais, la disposition selon l'invention présente également des avantages pour l'inspection d'un échantillon.

Dans ce cas, en effet, il est possible d'enrouler cet échantillon en un bobineau qui, ayant une longueur assez réduite, inférieure à 20 m, peut être facilement transporté dans une installation d'inspection comportant une dérouleuse et une enrouleuse placées, respectivement, à deux niveaux écartés en hauteur. A partir de la dérouleuse placée à un premier niveau qui n'est pas nécessairement le niveau inférieur, la bande se déroule en défilant verticalement devant l'opérateur pour s'enrouler sur le dispositif d'enroulement placé au second niveau. Le nouveau bobineau ainsi réalisé peut alors être évacué sans qu'il soit nécessaire de le faire défiler dans l'autre sens pour le ré-enrouler.

Par ailleurs, un tel procédé pourrait aussi être utilisé, pour vérifier la qualité de surface d'une bande réalisée par laminage réversible dans au moins une cage placée entre deux enrouleuses-dérouleuses. On sait que, dans ce cas, pour maintenir la bande sous tension au cours du laminage, il est nécessaire de maintenir une longueur de service enroulée sur chacune des enrouleuses-dérouleuses. Cette longueur de service n'a été laminée que lors du premier passage de la bande et doit donc être rebutée mais elle comporte les marques périodiques de laminage et peut donc servir d'échantillon pour le repérage des défauts. Cette longueur de service peut donc être enroulée en un bobineau qui est soumis à une inspection verticale de la façon décrite plus haut.

Il apparaît donc que l'invention permet de multiples applications et peut s'adapter à des situations très différentes, en particulier pour la modernisation d'installations existantes.

## Revendications

**1.** - Procédé d'inspection des deux faces d'une bande métallique (20) enroulée en une bobine (2), pour lequel on fait défiler au moins une partie de la bande (2) le long d'un plan d'inspection (P) sensiblement vertical entre un dispositif de déroulement (3) disposé à un premier niveau (11) et un dispositif d'enroulement (4) disposé à un second niveau (13), **caractérisé en ce que** l'inspection est réalisée visuellement par un opérateur (0) se déplaçant sur un plancher (12) disposé à un niveau intermédiaire entre le premier (11) et le second niveau (13) et pouvant passer d'un côté ou de l'autre du plan (P) de défilement de la bande (2) pour l'inspection des deux faces (23, 24) de celle-ci.

**2.** . Procédé d'inspection selon la revendication 1, **caractérisé par le fait que** la bobine (20) est prélevée sur le circuit de production d'une installation de laminage de bandes métalliques et est posée sur un dispositif de déroulement (3) placé à un niveau inférieur en tant que premier niveau (11), qu'une extrémité (21) de la

bande (2) est tirée avec déroulement de la bobine (20) pour être fixée sur un dispositif d'enroulement placé à un niveau supérieur en tant que second niveau (13), que l'on fait défiler

une partie à inspecter devant l'opérateur (0) et que l'on inverse ensuite le sens de défilement pour le réenroulement de la partie inspectée sur la bobine (20).

**3.** . Procédé d'inspection selon la revendication 1, **caractérisé par le fait que** la bande (2) inspectée est un échantillon d'une bande laminée, enroulé en un bobineau qui est disposé sur un dispositif de déroulement (3) placé à un premier niveau (11) et que l'on déroule le bobineau pour faire défiler l'échantillon devant l'opérateur (0) puis l'enrouler sur le dispositif d'enroulement (4) placé au second niveau (13).

**4.** . Procédé d'inspection selon la revendication 3, **caractérisé par le fait que**, la bande (2) étant réalisée par laminage réversible entre deux enrouleuses-dérouleuses placées de part et d'autre d'au moins une cage de laminage réversible, l'échantillon à inspecter est une longueur de service enroulée sur l'une des enrouleuses-dérouleuses et ayant subi au moins une passe de laminage.

**5.** . Procédé d'inspection selon l'une des revendications précédentes, **caractérisé par le fait que**, pour l'inspection d'une face (23) de la bande (20), celle-ci est appliquée par son autre face (24) sur une table 60) s'étendant suivant une direction sensiblement verticale et pouvant se déplacer entre une position d'inspection dans le plan de défilement (P) et une position écartée.

**6.** . Procédé d'inspection selon la revendication 5, **caractérisé par le fait que** la partie inspectée de la bande (2) est appliquée sur la table (60) par des électro-aimants équipant ladite table (60) et répartis sur la surface de celle-ci.

**7.** . Installation d'inspection sur ses deux faces d'une bande métallique (2) enroulée en une bobine (20), comprenant des moyens de commande du défilement de la bande (2) le long d'un plan (P) sensiblement vertical, entre un dispositif de déroulement (3) placé à un premier niveau (11) et sur lequel est placée la bobine (20) et un dispositif d'enroulement (4) placé à un second niveau (13) et sur lequel s'enroule au moins une partie de la bande (2) en défilant devant une station d'inspection (6), **caractérisée en ce que** la station d'inspection (6) est placée sur un plancher (12) disposé à un niveau intermédiaire entre le premier (11) et le second niveau (13) et sur lequel peut se déplacer un opérateur (0) en passant d'un côté ou de l'autre du plan de défilement (P) pour l'inspection visuelle des deux faces (23, 24) de la bande (2).

**8.** . Installation d'inspection selon la revendication 7, **caractérisée par le fait qu'**elle comporte des moyens amovibles (5) de prise en charge de la bande (20), déplaçables verticalement entre le premier niveau (11) pour la prise en charge d'une extrémité (21) de la bande et le second niveau (13) pour l'engagement de ladite extrémité (21) sur le dispositif d'enroulement (4) puis sa libération des moyens de prise en charge (5).

**9.** . Installation d'inspection selon la revendication 8, **caractérisée par le fait que** les moyens de prise en charge sont montés sur un chariot (5) déplaçable, le long d'un plan sensiblement vertical de défilement (P) de la bande (20), entre deux positions écartées verticalement, l'une à proximité du dispositif de déroulement (3) au premier niveau (11) et l'autre, à proximité du dispositif d'enroulement (4) au second niveau (13), lesdits moyens (5) de prise en charge comportant deux parties (52, 56) placées respectivement de part et d'autre dudit plan P de défilement de la bande (20) et des moyens (54) de déplacement l'une vers l'autre desdites deux parties (52, 56) pour le serrage d'une extrémité (21) de la bande (20) et le maintien de celle-ci dans le plan de défilement (P) par déplacement vertical du chariot (5).

**10.** . Installation d'inspection selon la revendication 9, **caractérisée par le fait que** les moyens (5) de prise en charge comportent une partie d'appui (56) montée fixe sur le chariot (5), du même côté que la bobine (2) par rapport au plan de défilement (P) et une partie mobile (52) placée de l'autre côté du plan de défilement (P) et déplaçable transversalement audit plan pour le pinçage de l'extrémité (21) de la bande (20) contre la partie d'appui fixe (56).

**11.** . Installation d'inspection selon la revendication 10, **caractérisée par le fait que** la partie d'appui des moyens de prise en charge (5) est une règle horizontale (56) ayant une arête (57) de décollement de l'extrémité (21) de la bande (20) et que la partie mobile comprend au moins un bras (52), monté pivotant sur le chariot (5) et actionné par un vérin (54) entre une position écartée et une position de serrage de l'extrémité (21) de la bande (20) sur la règle (56).

**12.** . Installation d'inspection selon l'une des revendications 8 à 11, **caractérisée par le fait que** le dispositif d'enroulement (4) comporte un organe de pinçage (42) dans lequel vient s'engager une tête (21) de la bande (20) dépassant au-dessus des moyens de prise en charge (5).

**13.** . Installation d'inspection selon la revendication 12, **caractérisé par le fait que** la station d'inspection (6) est équipée d'au moins une table (60) s'étendant sensiblement dans le plan de défilement (P), sur au moins un côté de celui-ci, ladite table (60) étant montée sur un cadre (61) déplaçable parallèlement audit plan (P), entre une position écartée et une position d'application sur la table d'une face correspondante (24) de la bande (20) pour l'inspection de l'autre face (23) par un procédé de pierrage.

**14.** . Installation d'inspection selon la revendication 13, **caractérisé par le fait que** la table (60) est équipée d'une pluralité d'électro-aimants répartis sur sa surface, pour l'application sur celle-ci, de la face (24) de la bande (20).

**Claims**

1. A method for inspecting two faces of a metal strip (20) wound into a coil (2), for which at least one section of the strip (2) is unwound along an approximately vertical inspection plane (P) between an unwinding device (3) disposed at a first level (11) and a winding device (4) disposed at a second level (13), **characterized in that that** inspection is performed visually by an operator (0) moving along a floor (12) disposed at an intermediate level between the first level (11) and the second level (13) and the operator being able to move from one side to the other of the unwinding plane (P) of the strip (2) to inspect the two faces (23, 24) of the former.

2. The method for inspecting according to claim 1, **characterized in that** the coil (20) is taken from a production circuit of a rolling installation for metal strips and is disposed on the unwinding device (3) placed at a lower level being the first level (11), that one end (21) of the strip (2) is pulled resulting in an unwinding of the coil (20) such that it is fixed on the winding device placed at a higher level being the second level (13), and that a section to be inspected is unwound in front of the operator (0) and that a direction of unwinding is reversed to rewind the inspected section around the coil (20).

3. The method for inspecting according to claim 1, **characterized in that** the inspected strip (2) is a sample of a rolled strip, wound into a reel which is disposed on the unwinding device (3) placed at the first level (11) and that the reel is unwound to unwind the sample in front of the operator (0) and also then wound on the winding device (4) placed on the second level (13).

4. The method for inspecting according to claim 3, **characterized in that** the strip (2) is reverse rolled between two winding-unwinding devices with at least one reversible lamination cage on either side, the sample to be inspected is a length of service coiled around one of the winding-unwinding devices and having undergone at least one rolling pass.

5. The method for inspecting according to one of the preceding claims **characterized in that**, to inspect a face (23) of the strip (20), the other face (24) of the latter is applied to a table (60) extending along an approximately vertical direction and being able to move between an inspection position in the unwinding plane (P) and a separate position.

6. The method for inspecting according to claim 5, **characterized in that** the inspected section of the strip (2) is applied to the table (60) by electromagnets equipping said table (60) and distributed over a surface of the latter.

7. An installation for inspecting two faces of a metal strip (2) wound around a coil (20), comprising means for controlling the unwinding of the strip (2) along an approximately vertical plane (P), between an unwinding device (3) placed at a first level (11) and on which the coil (20) is placed, and a winding device (4) placed at a second level (13) and on which winds at least one section of the strip (2) by unwinding in front of an inspection table (6) **characterized in that** the inspection table (6) is placed on the floor (12) disposed at an intermediate level between the first level (11) and the second level (13) and on which an operator (0) can move by passing from one side to the other of the unwinding plane (P) for visually inspecting the two faces (23, 24) of the strip (2).

8. The inspection installation according to claim 7, **characterized in that** it comprises detachable means (5) for handling the strip (20), said detachable means for handling moving vertically between the first level (11), where it grabs one end (21) of the metal strip, and the second level (13) where said one end (21) attaches to the winding device (4) and then said detachable means for handling (5) releases said one end.

9. The inspection installation according to claim 8, **characterized in that** the detachable means for handling are mounted on a carriage (5), said carriage being moved along the approximately vertical plane (P) of the strip (20), between two vertically separate positions, one near said unwinding device (3) on said first level (11) and the other, near said winding device (4) on said second level (13); and wherein said handling means (5) comprises two parts (52, 56) placed respectively on either side of said unwinding plane (P) of the strip (20) and means (54) for moving one of said two parts (52, 56) towards the other to clamp the one end (21) of the strip (20) and maintain the latter in the unwinding plane (P) during vertical movement of the carriage (5).

10. The inspection installation according to claim 9, **characterized in that** the means (5) for handling comprise a supporting part (56) mounted such that it is fixed to the carriage (5), on the same side as the coil (2) in relation to the unwinding plane (P) and a mobile part (52) placed on the other side of the unwinding plane (P) and which can be moved transversally to said plane to clamp the end (21) of the strip (20) against the fixed supporting part (56).

11. The inspection installation according to claim 10, **characterized in that** the supporting part of the handling means (5) is a horizontal ruler (56) having a stop (57) for detaching the one end (21) of the strip (20) and that said mobile part comprises at least one arm (52) mounted such that it pivots on said carriage (5) and is actuated by a jack (54) between a separate position and a position for clamping the one end (21) of the strip (20) on said ruler (56).

12. The inspection installation according to one of claims 8 to 11, **characterized in that** the winding device (4) comprises a clamping component (42) for engaging a head (21) of the strip (20) passing above the means for handling (5).

13. The inspection installation according to claim 12, **characterized in that** the inspection station (6) is equipped with at least one table (60) extending approximately along the unwinding plane (P), on at least one side of the latter, said table (60) being mounted on a frame (61) which can be moved parallel to said plane (P), between a separate position and an application position on said table of a corresponding face (24) of the strip (20) to inspect the other face (23) by a honing process.

14. The inspection installation according to claim 13, **characterized in that** the table (60) is equipped with a plurality of electromagnets distributed over its surface, to apply the face (24) of the strip (20) onto the surface of said table.


**Patentansprüche**

1. Verfahren zur Inspektion der zwei Seiten eines auf eine Rolle gewickelten Metallbandes, für welches man wenigstens einen Teil des Bandes entlang einer im Wesentlichen senkrechten Inspektionsebene (P) zwischen einer Abwickelvorrichtung (3), die auf einer ersten Höhe (11) angeordnet ist, und einer Aufwickelvorrichtung (4), die auf einer zweiten Höhe (13) angeordnet ist, durchlaufen lässt, **dadurch gekennzeichnet, dass** die Inspektion visuell von einem Bediener (O) durchgeführt wird, der sich auf einer Bühne (12) bewegt, die auf einer Zwischenhöhe zwischen der ersten (11) und der zweiten Höhe (13) angeordnet ist, und auf der einen oder der anderen Seite der Ebene (P) des Durchlaufs des Bandes zur Inspektion der zwei Seiten (23, 24) desselben vorbeigehen kann.

2. Verfahren zur Inspektion nach Anspruch 1, **dadurch gekennzeichnet, dass** die Rolle aus dem Produktionskreislauf einer Anlage zum Walzen von Metallband entnommen wird und auf eine Abwickelvorrichtung (3) gelegt wird, die auf einer unteren Höhe angebracht ist, welche die erste Höhe (11) darstellt, dass ein Ende (21) des Bandes mit Abwicklung von der Rolle abgezogen wird, um an einer Aufwickelvorrichtung befestigt zu werden, die auf einer oberen Höhe angebracht ist, welche die zweite Höhe (13) darstellt, dass man einen zu inspizierenden Teil vor dem Bediener (O) durchlaufen lässt, und dass man anschließend die Richtung des Durchlaufs umkehrt, zur Wiederaufwicklung des inspizierten Teils auf die Rolle.

3. Verfahren zur Inspektion nach Anspruch 1, **dadurch gekennzeichnet, dass** das inspizierte Band eine Probe eines gewalzten Bandes ist, die zu einer Rolle gewickelt wird, welche auf einer Abwickelvorrichtung (3) angeordnet wird, die auf einer ersten Höhe (11) angebracht ist, und dass man die Rolle abwickelt, um die Probe vor dem Operator (O) durchlaufen zu lassen, und sie danach auf die Aufwickelvorrichtung (4) aufwickelt, die auf der zweiten Höhe (13) angebracht ist.

4. Verfahren zur Inspektion nach Anspruch 3, **dadurch gekennzeichnet, dass**, wenn das Band durch Reversierwalzen zwischen zwei Auf- und Abwickelmaschinen hergestellt wird, die beiderseits mindestens eines Reversierwalzgerüstes angeordnet sind, die zu inspizierende Probe eine Betriebslänge ist, die auf eine der Auf- und Abwickelmaschinen gewickelt ist und mindestens einem Walzstich unterzogen wurde.

5. Verfahren zur Inspektion nach einem der vorhergehenden Ansprüche, **dadurch gekennzeichnet, dass** zur Inspektion einer Seite (23) des Bandes dieses mit seiner anderen Seite (24) an eine Platte (60) angelegt wird, die sich in einer im Wesentlichen senkrechten Richtung erstreckt und sich zwischen einer Inspektionsposition in der Durchlaufebene (P) und einer entfernten Position bewegen kann.

6. Verfahren zur Inspektion nach Anspruch 5, **dadurch gekennzeichnet, dass** der inspizierte Teil des Bandes an die Platte (60) durch Elektromagnete angelegt wird, mit denen die besagte Platte (60) ausgestattet ist und die auf der Oberfläche derselben verteilt sind.

7. Anlage zur Inspektion eines auf eine Rolle gewickelten Metallbandes auf seinen beiden Seiten, welche Mittel zur Steuerung des Durchlaufs des Bandes entlang einer im Wesentlichen senkrechten Ebene (P) zwischen einer Abwickelvorrichtung (3), die auf einer ersten Höhe (11) angebracht ist und auf welcher die Rolle angebracht ist, und einer Aufwickelvorrichtung (4), die auf einer zweiten Höhe (13) angebracht ist und auf welche wenigstens ein Teil des Bandes aufgewickelt wird, wenn es vor einer Inspektionsstation (6) durchläuft, umfasst, **dadurch gekennzeichnet, dass** die Inspektionsstation (6) auf einer Bühne (12) angebracht ist, die auf einer Zwischenhöhe zwischen der ersten (11) und der zweiten Höhe (13) angeordnet ist und auf welcher sich ein Bediener (O) bewegen kann, indem er zur visuellen Inspektion der zwei Seiten (23, 24) des Bandes auf der einen oder der anderen Seite der Durchlaufebene (P) vorbeigeht.

8. Anlage zur Inspektion nach Anspruch 7, **dadurch gekennzeichnet, dass** sie lösbare Mittel (5) zur Aufnahme des Bandes umfasst, die vertikal zwischen der ersten Höhe (11) zur Aufnahme eines Endes (21) des Bandes und der zweiten Höhe (13) zur Anbringung des besagten Endes (21) an der Aufwickelvorrichtung (4) und zur anschließenden Freigabe des Endes durch die Mittel zur Aufnahme (5) beweglich sind.

9. Anlage zur Inspektion nach Anspruch 8, **dadurch gekennzeichnet, dass** die Mittel zur Aufnahme an einem Wagen (5) angebracht sind, der entlang einer im Wesentlichen senkrechten Durchlaufebene (P) des Bandes zwischen zwei vertikal beabstandeten Positionen beweglich ist, wobei sich eine in der Nähe der Abwickelvorrichtung (3) auf der ersten Höhe (11) und die andere in der Nähe der Aufwickelvorrichtung (4) auf der zweiten Höhe (13) befindet, wobei die besagten Mittel (5) zur Aufnahme zwei Teile (52, 56), die beiderseits der Durchlaufebene (P) des Bandes angebracht sind, und Mittel (54) zur Bewegung der besagten zwei Teile (52, 56) aufeinander zu zum Festklemmen eines Endes (21) des Bandes und Festhalten desselben in der Durchlaufebene (P) durch vertikale Bewegung des Wagens (5) aufweisen.

10. Anlage zur Inspektion nach Anspruch 9, **dadurch gekennzeichnet, dass** die Mittel (5) zur Aufnahme einen Abstützungsteil (56) aufweisen, der bezüglich der Durchlaufebene (P) auf derselben Seite wie die Rolle fest an dem Wagen (5) angebracht ist, und einen beweglichen Teil (52), der auf der anderen Seite der Durchlaufebene (P) angebracht ist und quer zu der besagten Ebene beweglich ist, zum Festklemmen des Endes (21) des Bandes gegen den festen Abstützungsteil (56).

11. Anlage zur Inspektion nach Anspruch 10, **dadurch gekennzeichnet, dass** der Abstützungsteil der Mittel zur Aufnahme (5) eine waagerechte Leiste (56) ist, die eine Kante (57) zur Ablösung des Endes (21) des Bandes aufweist, und dass der bewegliche Teil mindestens einen Arm (52) umfasst, der schwenkbar an dem Wagen (5) angebracht ist und durch einen Zylinder (54) zwischen einer entfernten Position und einer Position des Festklemmens des Endes (21) des Bandes an der Leiste (56) betätigt wird.

12. Anlage zur Inspektion nach einem der Ansprüche 8 bis 11, **dadurch gekennzeichnet, dass** die Aufwik-

kelvorrichtung (4) ein Klemmelement (42) aufweist, in welches ein Kopfende (21) des Bandes eingreift, das über die Mittel zur Aufnahme (5) hinausragt.

13. Anlage zur Inspektion nach Anspruch 12, **dadurch gekennzeichnet, dass** die Inspektionsstation (6) mit mindestens einer Platte (60), die sich im Wesentlichen in der Durchlaufebene (P) erstreckt, auf mindestens einer Seite derselben ausgestattet ist, wobei die besagte Platte (60) auf einem Rahmen (61) angebracht ist, der parallel zu der besagten Ebene (P) zwischen einer entfernten Position und einer Position der Anlage einer entsprechenden Seite (24) des Bandes an der Platte zur Inspektion der anderen Seite (23) durch ein Honverfahren beweglich ist.

14. Anlage zur Inspektion nach Anspruch 13, **dadurch gekennzeichnet, dass** die Platte (60) mit einer Vielzahl von Elektromagneten ausgestattet ist, die auf ihrer Oberfläche verteilt sind, zum Anlegen der Seite (24) des Bandes an dieselbe.

FIG.1

FIG.2

FIG.3

FIG.4

FIG.5

Fig. 6a    Fig. 6b    Fig. 6c

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2000254725 B
- JP 59113916 B
- US 2502469 A

- JP 2000254725 A
- JP 59113916 A